(19)

**Europäisches Patentamt**
**European Patent Office**
**Office européen des brevets**

(11) **EP 4 197 920 B1**

(12) **EUROPEAN PATENT SPECIFICATION**

(45) Date of publication and mention
of the grant of the patent:
**22.04.2026 Bulletin 2026/17**

(21) Application number: **21855005.1**

(22) Date of filing: **09.08.2021**

(51) International Patent Classification (IPC):
*B64G 1/10* (2006.01)   *B64G 1/22* (2006.01)
*B64G 1/64* (2006.01)   *B64G 1/00* (2006.01)
*B64G 1/12* (2006.01)   *B64G 1/24* (2006.01)
*B64G 1/40* (2006.01)   *B64G 1/60* (2006.01)

(52) Cooperative Patent Classification (CPC):
**B64G 1/64; B64G 1/002; B64G 1/10; B64G 1/1078;
B64G 1/12; B64G 1/2427; B64G 1/40; B64G 1/60;
B64G 1/646**

(86) International application number:
**PCT/BY2021/000014**

(87) International publication number:
**WO 2022/032370 (17.02.2022 Gazette 2022/07)**

(54) **ARTIFICIAL ORBITAL RING COMPLEX BY YUNITSKI AND METHOD OF REALIZATION THEREOF**

KÜNSTLICHES ORBITALRINGSYSTEM VON YUNITSKI UND VERFAHREN ZUR REALISIERUNG

COMPLEXE ANNULAIRE ORBITAL ARTIFICIEL DE YUNITSKI ET PROCÉDÉ DE RÉALISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.08.2020 EA 202000304**

(43) Date of publication of application:
**21.06.2023 Bulletin 2023/25**

(73) Proprietor: **Unitsky, Anatoli Eduardovich
222838, Minsk region, Pukhovichi district (BY)**

(72) Inventor: **Unitsky, Anatoli Eduardovich
222838, Minsk region, Pukhovichi district (BY)**

(74) Representative: **Winter, Brandl - Partnerschaft
mbB
Alois-Steinecker-Straße 22
85354 Freising (DE)**

(56) References cited:
**WO-A2-2020/024035      RU-A- 2013 106 170
RU-C2- 2 463 220        US-A- 4 318 517**

- **BIRCH PAUL: "Orbital Ring Systems and Jacob^s Ladders - I", JOURNAL OF THE BRITISH INTERPLANETARY SOCIETY, 30 November 1982 (1982-11-30), pages 474 - 497, XP093188008, Retrieved from the Internet <URL:https://www.orionsarm.com/fm_store/OrbitalRings-I.pdf> [retrieved on 20240722]**
- **BIRCH PAUL: "Orbital Ring Systems and Jacob's Ladders - II", JOURNAL OF THE BRITISH INTERPLANETARY SOCIETY, 1 March 1983 (1983-03-01), pages 115 - 128, XP093188063, Retrieved from the Internet <URL:https://www.orionsarm.com/fm_store/OrbitalRings-II.pdf> [retrieved on 20240722]**
- **BIRCH PAUL: "Orbital Ring Systems and Jacob's Ladders - III", JOURNAL OF THE BRITISH INTERPLANETARY SOCIETY, 1 March 1983 (1983-03-01), pages 231 - 238, XP093188065, Retrieved from the Internet <URL:https://www.orionsarm.com/fm_store/OrbitalRings-III.pdf> [retrieved on 20240722]**

EP 4 197 920 B1

(Cont. next page)

• ANONYMOUS: "Yunitskiy's string technologies. Site news", YUNITSKIY.COM, 14 April 2017 (2017-04-14), XP055905949, Retrieved from the Internet <URL:https://www.yunitskiy.com/news/2017/news20170414.htm> [retrieved on 20220328]

• ANONYMOUS: "Yunitskiy's string technologies. Site news", YUNITSKIY.COM, 14 April 2017 (2017-04-14), XP055905949, Retrieved from the Internet <URL:https://www.yunitskiy.com/news/2017/news20170414.htm> [retrieved on 20220328]

• ANONYMOUS: "Yunitskiy's string technologies. Site news", YUNITSKIY.COM, 14 April 2017 (2017-04-14), XP055905949, Retrieved from the Internet <URL:https://www.yunitskiy.com/news/2017/news20170414.htm> [retrieved on 20220328]

• ANONYMOUS: "Yunitskiy's string technologies. Site news", YUNITSKIY.COM, 14 April 2017 (2017-04-14), XP055905949, Retrieved from the Internet <URL:https://www.yunitskiy.com/news/2017/news20170414.htm> [retrieved on 20220328]

## Description

## Technical field

The invention relates to the area of space science, in particular, to the area of industrialization of outer space and, directly, to the facilities for placing and moving various objects in circumplanetary cosmic space. It is designed to solve many geocosmic problems in industrial-scale volumes, for example, to place the environmentally harmful part of the Earth's industry into near space, as well as to normalize the planet's climate and carry out research and development, special-purpose, touristic and other types of works and services in outer space.

## Background Art

The works of the Russian scientist, the founder of cosmonautics, K.E. Tsiolkovsky, who first created the theoretical foundation for the flight of man to the stars, describe how the life of future colonists in space can proceed. First of all, Tsiolkovsky believed, people should populate near-Earth space, and for the construction of "ethereal settlements" he proposed using material from planets and asteroids. Most of the inhabitants of the Earth, Tsiolkovsky wrote, "in pursuit of light and space form around it a moving swarm of "ethereal settlements" in the form of a ring, like the ring of Saturn, only relatively larger." As the beads are strung in the necklace, so will the "ethereal settlements" consist of separate stations gradually connected together. Stations must be built on Earth, tested and delivered to orbit, where they will be finally assembled [1].

The disadvantages of such technical approach are the uncertainty of the specific characteristics and parameters of the implementation of a number of elements of the structure, interaction and interconnection thereof, as well as insufficient protection of the "ethereal settlement" and its inhabitants against harmful actions from space.

In addition to the works of Tsiolkovsky, Oberth, Noordung, an example of similar proposals are the layouts of the "ethereal settlement" and the orbital station of the "bubbly type", designed by the famous ballistics scientist and popularizer of cosmonautics, A.A. Sternfeld, and/or American specialists, wherein a "boublik" weighing 500 thousand tons, making one revolution per minute, could create artificial gravity for its inhabitants, about 10 times smaller than the Earth's. By reducing the amount of nitrogen in the station atmosphere, pressure reduction to 0.5 atmosphere would have been possible. It was assumed that up to 10 thousand people would live in such a space city. Therein, 450 thousand square meters would be allocated for crops of grain and vegetables, as well as farms for pets and fish tanks provided [2].

The disadvantage of such a technical solution is weak protection thereof both against ultraviolet radiation and other types of harmful influence of space.

One of the well-known options for creating a colony of humanity in space is proposed by O'Neill self-sufficient settlement - the "island in space", which gained fame as the "O'Neill Cylinders", wherein maintenance of food reproduction and the presence of own atmosphere are provided for. The largest "islands" will have 24 kilometers in diameter and 120 kilometers in length, which will provide an area of potential settlement of 18,000 square kilometers - about half of Switzerland territory. Such "O'Neill Cylinders" will be completely closed and will rotate to ensure the presence of gravity similar to the one on Earth. Their rotation can be adjusted to simulate a change in time of day [3].

The disadvantages of such technical approach are the uncertainty of the specific characteristics and parameters of the implementation of a number of elements of the structure, interaction and interconnection thereof, as well as insufficient protection of the "ethereal settlement" and its inhabitants against harmful actions from space.

The idea of the space "necklace" of the Earth developed by Georgy Polyakov is known. The space "necklace" consists of radially positioned equatorial elevators and a huge ring extending just above the geosynchronous orbit, to which plenty of space stations are moored. The radius of the space "necklace" ring is slightly larger than the radius of its geosynchronous orbit, which ensures the position stability. In this case, an excess of centrifugal force stretches the "necklace". The ring is in a state close to zero gravity, it does not experience much stress, and construction thereof is much easier than the construction of a separate space elevator. Alongside with residential settlements, such as the O'Neill Cylinders, there are also stations with industrial, agricultural and energy production on the ring. It is envisaged that the technological processes of these enterprises are based on closed and fully automated cycles [4].

The disadvantages of such technical approach are the substantial material and financial costs, as well as significant technological difficulties in creating such space settlement in the suggested, rather remote geosynchronous orbit. At the same time, at such a distance from our planet, the protective effect of its magnetic field and atmosphere will not be sufficient for effective and long-term active shielding of the inhabitants of the space "necklace" against various types of harmful influence of space.

A structure is known for positioning physical bodies thereon in circumplanetary space, made in the form of a ring - satellite located in a circular orbit around a planet in the said circumplanetary space in the plane parallel to equatorial plane thereof and passing through its center. The radius of the ring - satellite is larger than the radius of the planet. In addition, the ring - satellite is formed by self-balancing gravity forces of the parts of the ring - satellite and centrifugal forces acting on certain parts of the ring located on opposite sides of the center of the planet mass [5].

The disadvantages of such technical approach are that it does not sufficiently represent the possibility of creating a space settlement within the proposed technical solution, and its design does not provide for the effective protection of the inhabitants of the space settlement against the harmful effects of space.

A method of arranging an artificial orbital complex is known, developed according to the project of engineer Darrell Romick in the Aerophysics Department of Goodyear Aircraft Company [6]. The proposed method comprises delivering of modular carcass blocks into orbit, then combining them into a single load-bearing body with a protective shell in the form of a "city in the sky", equipped with systems of control and life support. Such a space settlement, on its scale, should significantly exceed two Empire State Buildings, placed one on the other, with Pentagon building rotating at the top. On the outside of structure thereof, the observatories, radar antennas, "louver windows" are installed, which, to regulate the temperature inside the settlement, absorb or reflect solar energy. Thin outer layer - a meteorite bumper - protects residents from direct hits of meteorites. Small ones bounce off the outer layer, and large ones decelerate so that they cannot penetrate the main encasement.

The disadvantages of this method are the low efficiency of creation and reliability of the design of a space settlement mounted in outer space.

The prototype proposed by K.E. Tsiolkovsky is known for the method of building an artificial orbital ring complex in a circular orbit - an "ethereal settlement" in the form of a ring, in the image of Saturn's rings, assembled "like beads in a necklace" from separate stations created on Earth separately, tested there and delivered to orbit, where they will be gradually connected together and finally assembled into an "ethereal settlement" [7].

The disadvantage of this method is the low performance of creating the structure of a space settlement when delivering its blocks to orbit using rockets.

The next-coming prior art document WO 2020/024035 A2 relates to a global geocosmic transportation system and a method for placing a payload for the surface of a planet into a circular orbit.

Further techniques are know from the following documents. BIRCH PAUL: "Orbital Ring Systems and Jacob's Ladders -,"I JOURNAL OF THE BRITISH INTERPLANETARY SOCIETY, vol. 35, 30 November 1982 (1982-11-30), pages 474-497, BIRCH PAUL: "Orbital Ring Systems and Jacob's Ladders - I", JOURNAL OF THE BRITISH INTERPLANETARY SOCIETY, vol. 36, 1January 1983 (1983-01-01), pages 115-128 and BIRCH PAUL: "Orbital Ring Systems and Jacob's Ladders - I1", JOURNAL OF THE BRITISH INTERPLANETARY SOCIETY, vol. 36, 1January 1983 (1983-01-01), pages 231-238. In these documents, conditions for a stress-free operation of an orbital ring system are defined including a massive ring in a nearly circular low orbit or counter-rotating pairs of rings following the rotation of the Earth.

Object of the present invention The Scientific School by engineer Anatoly Yunitski is a logical continuation of Tsiolkovsky's teachings.

The present invention is based on the object of achieving the following technical goals:

- ensuring increased protection of the space settlement and its inhabitants against the harmful effects of outer space;
- expansion of technical capabilities of artificial orbital ring complex.

## Summary of invention

This object is solved by the subject matter of claim 1. Further aspects of the invention are disclosed in the subclaims.

More specifically, technical goals in accordance with the object of the invention are attained by means of artificial orbital ring complex by Yunitski in the form of a ring satellite, located in a circular orbit around a natural cosmic body in the equatorial plane, which comprises: structural frame, utilities and communications, power units, transition galleries placed in annular housing with protective shell, gate chambers with docking units, configured to dock with space vehicles, residential and research-production units, equipped with systems of control, life support, active and passive protection against the harmful effects of space, whereby structural frame is longitudinally tensioned, and ring satellite in circular motion in orbit around a natural cosmic body with velocity $V_0$, m/sec, defined by the ratio:

$$1 \leq V_0/V_{1H} \leq 1.01,$$

where $V_{1H}$, m/sec, - first space velocity for the equatorial circular orbit of the location of the ring line connecting the centers of mass of the cross sections of the artificial orbital ring complex, at altitude of $H0$, m, defined by the ratio:

$$0.02 \leq H_0/R_0 \leq 0.5,$$

where $R_0$, m, - radius of natural cosmic body in the equatorial plane.

Achievement of the above result is also ensured by the fact that the center of mass of each cross section of the structural frame is aligned with the center of mass of the corresponding cross section of the artificial orbital ring complex.

The above result is achieved due to the fact that the structural frame contains at least one tensioned load-bearing member encircling the natural cosmic body in the equatorial plane.

Other specific essential features of the artificial orbital ring complex by Yunitski are that the load-bearing member is formed by mating of load-bearing structure consisting of longitudinally tensioned extended elements, with the body of the load-bearing member and/or with an annular housing with protective shell.

Depending on the practical realization of the artificial orbital ring complex by Yunitski, the extended elements of the load-bearing structure can be made of wire, and/or rods, and/or twisted or untwisted ropes, and/or strands, strips, tapes, bands, tubes and other extended elements.

Preferably, the structural frame is embodied electrically conductive in the longitudinal direction.

The above result is achieved due to the fact that the structural frame is longitudinally tensioned with force $F_0$, N, defined by the ratio:

$$1 \leq F_0/F_1 \leq 1.01,$$

where: $F_1$, N, - axial force due to action of centrifugal force on the structure of the ring satellite.

The subject of the present invention is advantageously directed to the fact that for the artificial orbital ring complex by Yunitski, the natural cosmic body is represented by the planet Earth.

Hereby, an alternative variant of practical realization of the artificial orbital ring complex by Yunitski is embodiment of the structural frame from at least one longitudinally tensioned thin-walled tube of internal diameter $D_0$, m, defined by the ratio:

$$1 \leq D_0/h_0 \leq 5,$$

where: $h_0$, m, - the average height of homo sapiens living on Earth.

According to the background of the present invention, the structural frame may be used for electric power transportation (transmission) as a power line.

According to the background of the present invention, a method of arrangement of the artificial orbital ring complex by Yunitski according to Claim 1 may be provided, which includes delivery at the first space velocity of parts of the structural frame with load-bearing member onto the circular orbit of the natural cosmic body, utilities, communications, power, residential and research-production units, transition galleries, their placement and assembly in and/or on the annular housing with protective shell, encircling the natural cosmic body, testing and verifying performance of all operational parameters of the ring satellite assembly, *further* characterized in that:

- positioning is performed of the ring satellite in the equatorial plane of the circular orbit of the natural cosmic body, wherein the ring satellite is made with the length of the ring $L_0$, m, defined by the ratio:

$$1.01 \leq L_0/L_1 \leq 1.5,$$

where: $L_1$, m, - length of the equator of the natural cosmic body;

- during installation, longitudinal tensioning is formed, in the extended load-bearing structure of the load-bearing member of the structural frame, by increasing the rotation velocity of the ring satellite in circular orbit to the velocity of $V_0$, m/sec, defined by the ratio:

$$1 \leq V_0/V_{1H} \leq 1.01,$$

where $V_{1H}$, m/sec, is the first space velocity for the equatorial circular orbit of the location of the ring line connecting the centers of mass of the cross sections of the artificial orbital ring complex, at altitude of $H_0$, m, defined by the ratio:

$$0.02 \leq H_0/R_0 \leq 0.5,$$

where $R_0$, m, - radius of the natural cosmic body in the equatorial plane.

**Brief description of drawings**

The essence of the invention will be explained in detail by the accompanying drawings (Figs. 1 - 11) showing the following:

Fig.1 - layout image of the artificial orbital ring complex by Yunitski - view from space from the pole side (embodiment);

Fig.2 - layout image of the plane of location of the orbit of the artificial orbital ring complex by Yunitski - general view from space from the side of the equator (embodiment);

Fig.3 - layout image of the artificial orbital ring complex by Yunitski on the specified circular orbit around the natural cosmic body - view from space from the pole side (embodiment);

Fig.4 - layout image, on the specified circular orbit around the natural cosmic body, of the artificial orbital ring complex by Yunitski in toroidal form - general view with sections (embodiment);

Fig.5 - layout image of the general view of the artificial orbital ring complex by Yunitski on the specified circular orbit - general view with cross section (embodiment);

Fig.6 - layout image of embodiment of the artificial orbital ring complex by Yunitski with high-speed transport system in the form of the string track structure - general view with cross section;

Fig.7 - layout image of embodiment of docking of the artificial orbital ring complex by Yunitski with space vehicle - general view;

Fig.8 - layout image of the general view of the artificial orbital ring complex by Yunitski, consisting of three frames with annular housings combined in a single belt - general view (embodiment);

Fig.9 - layout image of cross section of the layers of passive protection of protective shell of annular housing;

Fig. 10 - layout image of distribution of forces acting on the elements of the structure of the artificial orbital ring complex by Yunitski;

Fig.11 - layout image of the elements of the annular housing, connected with each other by bellows - longitudinal section (embodiment).

Positions in the Figures:

1 - ring satellite;
2 - natural cosmic body;
3 - plane of location of the ring satellite (plane of the equator of the natural cosmic body);
4 - equator of the natural cosmic body;
5 - circular orbit;
6 - center of mass of the natural cosmic body;
7 - structural frame;
8 - utilities;
9 - communications;
10 - power units;
11 - transition galleries;
12 - annular housing;
13 - protective shell;
14 - gate chambers;
15 - docking units;
15.1 - docking units on the external and/or lateral sides of the load-bearing body;
15.2 - docking units on the internal side of the load-bearing body (for space vehicle);
16 - space vehicle (embodiment);
17 - passive protection system;
17.1 - anti-meteorite layer;
17.2 - anti-radiation layer;
17.3 - heat insulation layer;
18 - space;
19 - residential units;
20 - research-production units;
21- clusters of annular housing;
22 - bellows;
23 - load-bearing member;
23.1 - extended element of load-bearing member;
23.2 - body of load-bearing member;
24 - high-speed transport system (embodiment);
25 - thin-walled tube of high-speed transport system (embodiment).

$M$ - the line of centers of mass of the structural frame;
$M_1$ - the line of centers of mass of the cross sections of the artificial orbital ring complex;
$D_0$, m, - internal diameter of thin-walled tube;
$h_0$, m, - the average height of homo sapiens living on Earth (not shown in Figures);
$V_0$, m/sec, - circular velocity of the ring satellite in the orbit of the natural cosmic body;

$V_{1H}$, m/sec, - first space velocity for the equatorial circular orbit of the location of the ring line connecting the centers of mass of the cross sections of the artificial orbital ring complex;
$R_0$, m, - radius of natural cosmic body;
$R_1$, m, - radius of circular orbit of ring satellite;
$H_0$, m, - altitude of circular orbit of the location of the ring line connecting the centers of mass of the cross sections of the artificial orbital ring complex;
$L_1$, m, - length of ring satellite in equatorial plane of circular orbit of natural cosmic body;
$L_0$, m, - length of equator of natural cosmic body;
$F_0$, N, - axial tensile force of structural frame;
$F_1$, N, - centrifugal force on structure of ring satellite;
$F_T$, N, - gravity force acting on ring satellite in any of its points.

**Embodiments of invention**

The essence of the invention lies in more detail in the following.

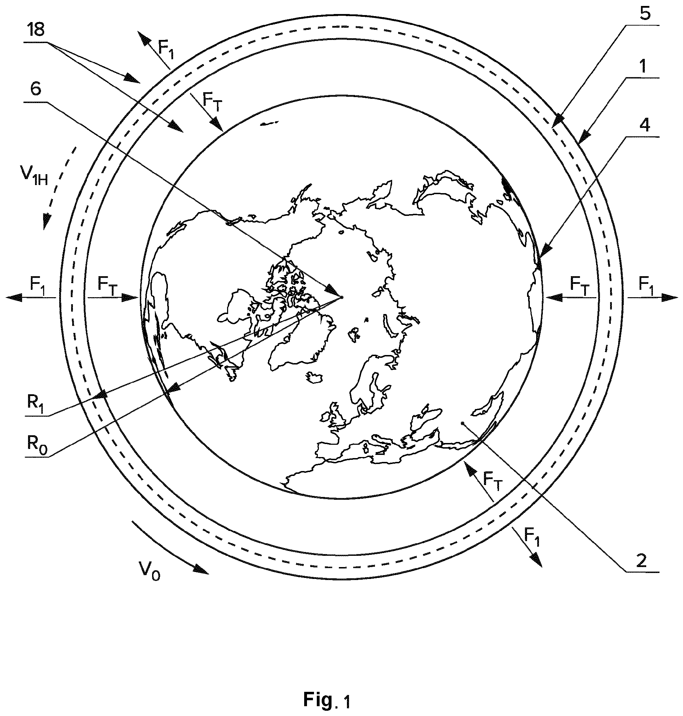

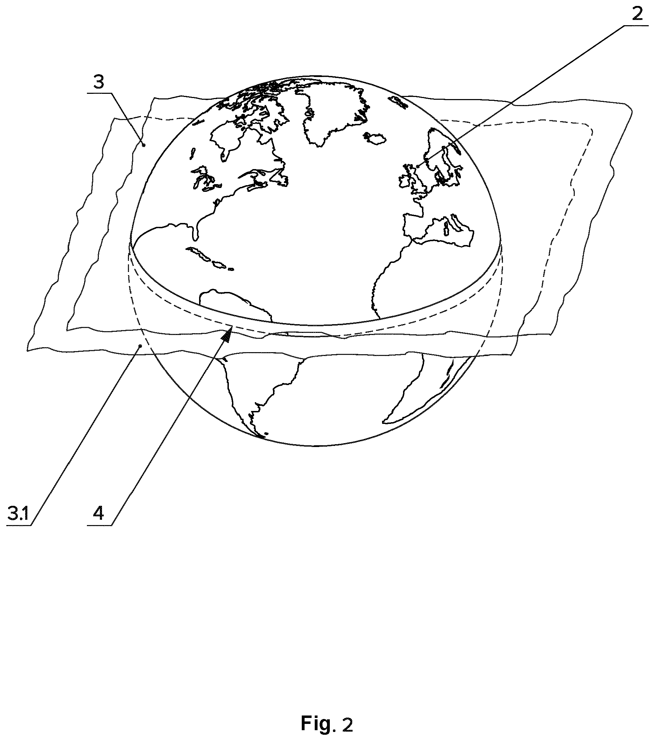

The claimed artificial orbital ring complex by Yunitski comprises ring satellite 1, encircling a natural cosmic body 2 in its equatorial 4 plane 3 (see Figs. 1 - 3).

Hereby, the ring satellite 1 is located in a circular orbit 5 of the natural cosmic body 2, matching with equatorial 4 plane 3 of this natural cosmic body 2.

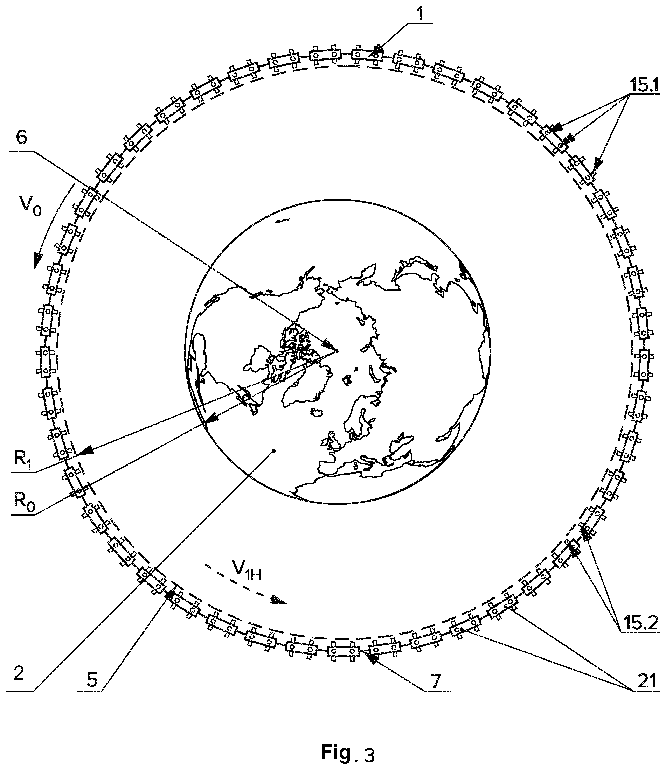

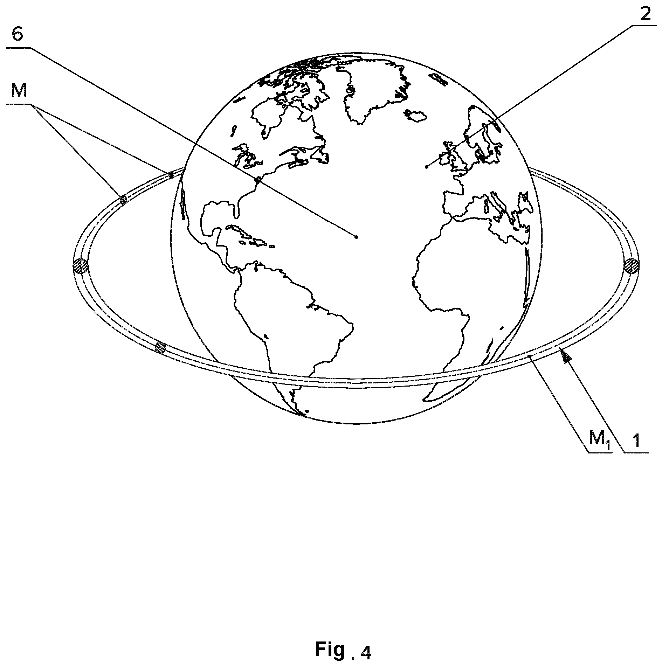

To the ring satellite 1, a habitable space complex is referred to, encircling the natural cosmic body 2 and configured toroidal-shaped to rotate around the center of mass 6 of the natural cosmic body 2 (see Figs.3 and 4).

Additionally, the ring satellite 1 is made self-stabilizing by centrifugal forces $F_1$, N, axial tensile forces $F_0$, N, and gravity forces $F_T$, N, of any part of the said ring satellite 1 (see Fig. 1).

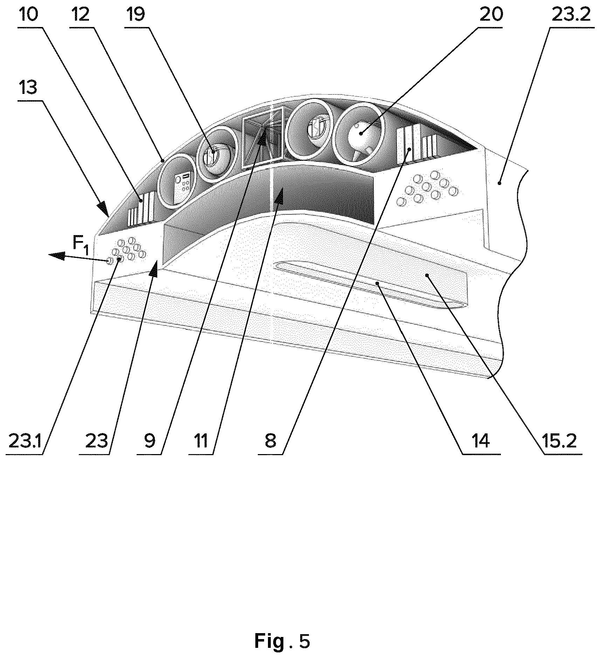

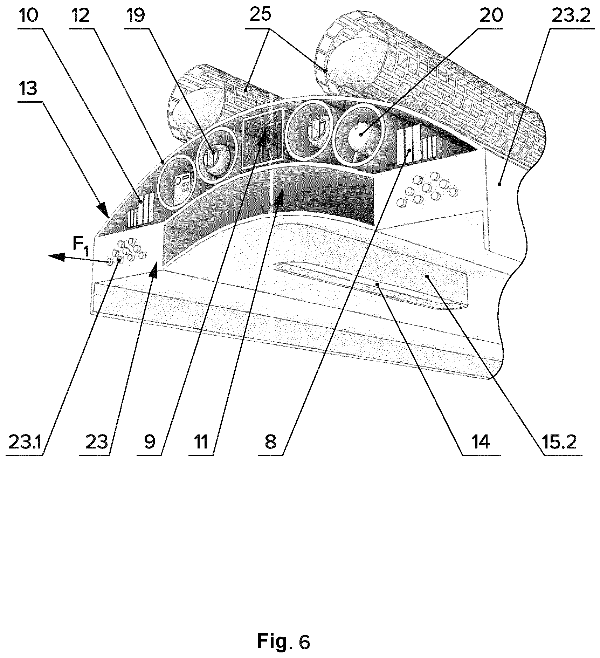

The ring satellite 1 contains interconnected structural frame 7, utilities 8 and communications 9, power units 10 and transition galleries 11, positioned into annular housing 12 with protective shell 13 (see Figs.5 and 6).

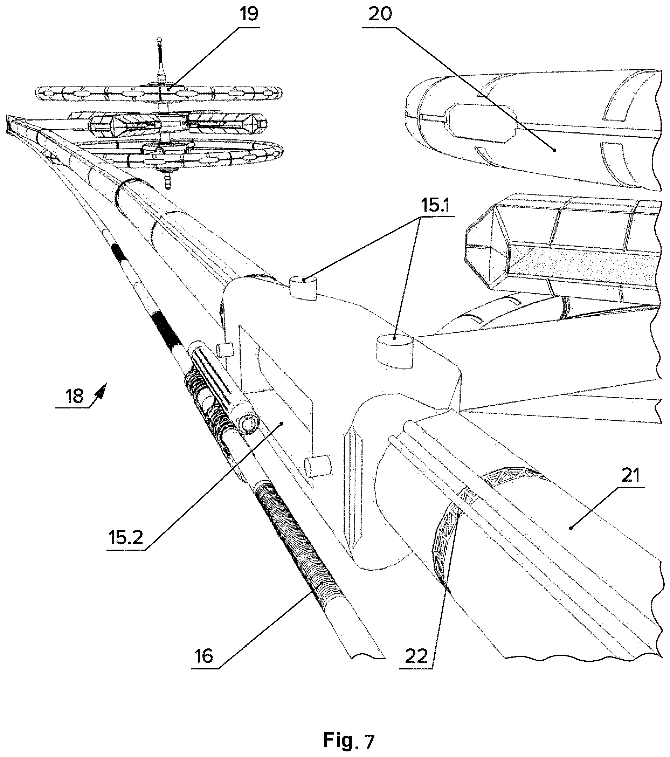

Hereby, the annular housing 12 of the ring satellite 1 is equipped by integrated therein gate chambers 14 with docking units 15 (15.1 and 15.2), configured to dock with any of the known space vehicles 16, for instance, the general planetary vehicle by Yunitski (see, for instance, Fig.7).

Furthermore, the annular housing 12 of the ring satellite 1 is equipped with positioned therein and combined there in between the systems of control and life support (not shown in Figures), as well as the systems of active (not shown in Figures) and passive 17 protection against the harmful effects of space 18, and - residential 19 and research-production 20 units (see Figs.7 - 9).

The arrangement of utilities 8, communications 9, transition galleries 11, gate chambers 14 with docking units 15, as well as the united systems of control, life support, active and passive 17 protection against the harmful effects of space, residential 19, research-production 20 and power 10 units, may have any design and functioning algorithm characteristic to the similar systems used in modern operating space stations to ensure the solution of the relevant orbital problems (see Figs.5 - 7 and 9).

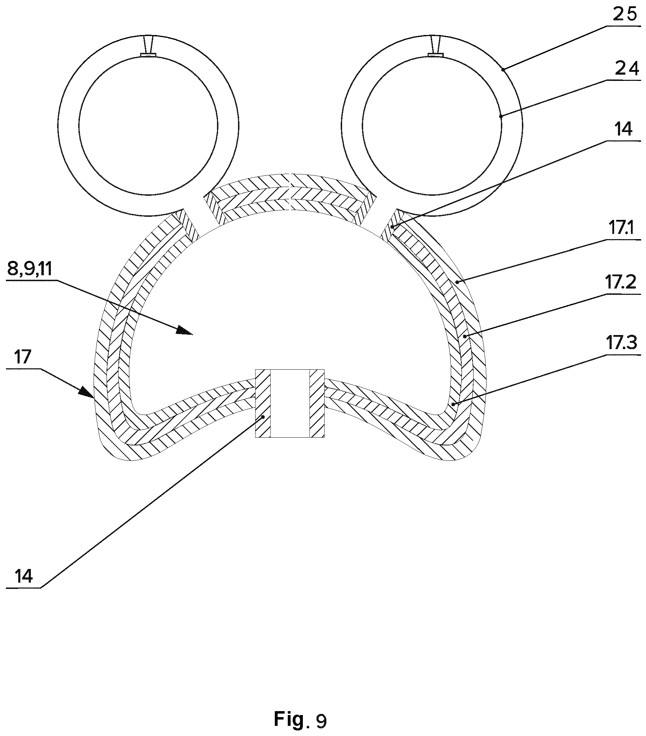

Alternatively, as passive space protection systems 17, the protective shell 13 of the annular housing 12 may be embodied as a multilayer one and comprise, for instance, anti-meteorite 17.1, anti-radiation 17.2, and heat insulation 17.3 layers, including earth biogeocenosis with a fertile soil layer (see Fig.9).

The combined systems of control, energy and life support of the proposed complex are interconnected. Hereby, all said systems of the ring satellite 1 are distributed along the entire length of the annular housing 12 and ensure the functions of each of the systems in any separate section of the artificial orbital ring complex.

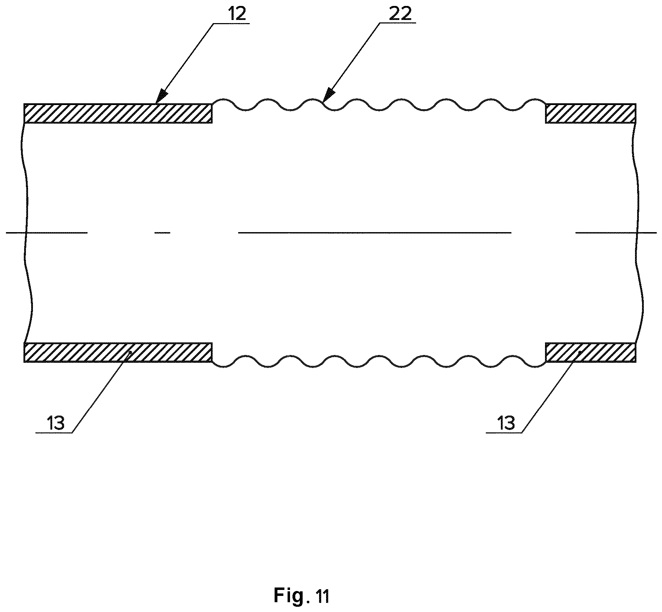

Additionally, depending on the design option, the annular housing 12 can be made of clusters 21 combined by bellows 22 (see Figs.3, 7, 8 and 11).

The embodiment of the annular housing 12 with the clusters 21 reduces the power consumption, required to provide elastic deformation in the longitudinal direction of the structural frame 7 of the annular housing 12 during the positioning of the ring satellite 1 in the circular orbit 5 of the natural cosmic body 2 and expand the range of materials, used for the manufacture thereof, as well as increase the effectiveness of passive protection 17, against the harmful influence of space 18, of individual zones of the artificial orbital ring complex.

An essential circumstance of the proposed artificial orbital ring complex is that its structure contains at least one continuous member, which is its structural frame 7 encircling the natural cosmic body 2 in the plane 3 of its equator 4.

Hereby, the structural frame 7 contains at least one extended load-bearing member 23 (see Figs.5 and 6).

Hereby, in any variants of practical realization of the structure of the ring satellite 1, its structural frame 7 in operational condition is tensioned in longitudinal direction of the annular housing 12.

Thus, the dynamic stiffness and required strength of the ring satellite 1, which, while in orbit, rotates around the planet at a velocity exceeding the first space one, and therefore is in a prestressed state under the influence of centrifugal forces.

The tensile force for longitudinal tensioning of the structural frame 7 is ensured by a controlled additional increase in velocity during circular motion of the structural frame 7 and the annular housing 12 of the ring satellite 1 in circular orbit 5 around the natural cosmic body 2 in order to achieve a value of the specified velocity $V_0$ when positioned in a circular orbit 5. Such additional increase in velocity during circular motion, as well as the circular motion itself, can be provided by any of the known methods, for example, by using jet engines of the ring satellite 1 (not shown in Figures), or by general planetary vehicle by Yunitski, which enters the orbit also in the equatorial plane.

Positioning of the ring satellite 1 in the circular orbit 5 of the natural cosmic body 2 is performed in such a way that the center of mass M of each cross section of the structural frame 7 is aligned with the center of mass $M_1$ of the same cross section of the artificial orbital ring complex, while these centers of mass are located in the same plane with the center of mass 6 of the natural cosmic body 2 (see Fig.4). Moreover, the load-bearing structure of the structural frame 7 must pass along the line of the centers of mass (or the lines of the centers of inertia) of the structural elements of the ring satellite 1 in order to exclude its unfavorable dynamics (longitudinal and transverse vibrations) from the operation of the transport complex (especially during its acceleration and deceleration). This ensures the integrity of the structure of the artificial orbital ring complex and will prevent its dynamic destruction.

Equipping the artificial orbital ring complex with any of the known high-speed transport systems 24, such as one based on the string track structure, is a preferred embodiment. In this case, its structure should provide at least one transport artery, for example, in the form of a thin-walled tube 25 with a corresponding internal diameter $D_0$. This will allow to carry out rapid commuting (communication) of specialists and required cargo flows along the entire annular housing 12 of the ring satellite 1 already in the circular orbit 5 (see Figs.6, 9).

Depending on the design option, the load-bearing member 23 may be formed by mating the load-bearing structure consisting of longitudinally tensioned extended elements 23.1 with the body 23.2 of the load-bearing member 23, and/or with the annular housing 12 with the protective shell 13, and/or with longitudinally tensioned, at least one, thin-walled tube 25 with the specified internal diameter $D_0$. This will improve the efficiency of the use of the various structural elements of the ring satellite 1.

As extended elements 23.1 of the load-bearing member 23, depending on the specific design option, one and/or several bundles can be used, for example, made of wire and/or rods, and/or twisted - untwisted ropes, cables, bands, strips, cords, strands, tubes or other extended elements made of any high-strength materials (not shown in the Figures).

Hereby, the structural frame 7 may be electrically conductive in the longitudinal direction, which will expand its functionality.

Accordingly, the described embodiment of the structural frame 7 in the form of a longitudinally conductive element makes it possible to consider, as an additional object of the invention, the use of the structural frame 7 for an additional purpose - as a power line for transmitting electric power along the orbital ring complex.

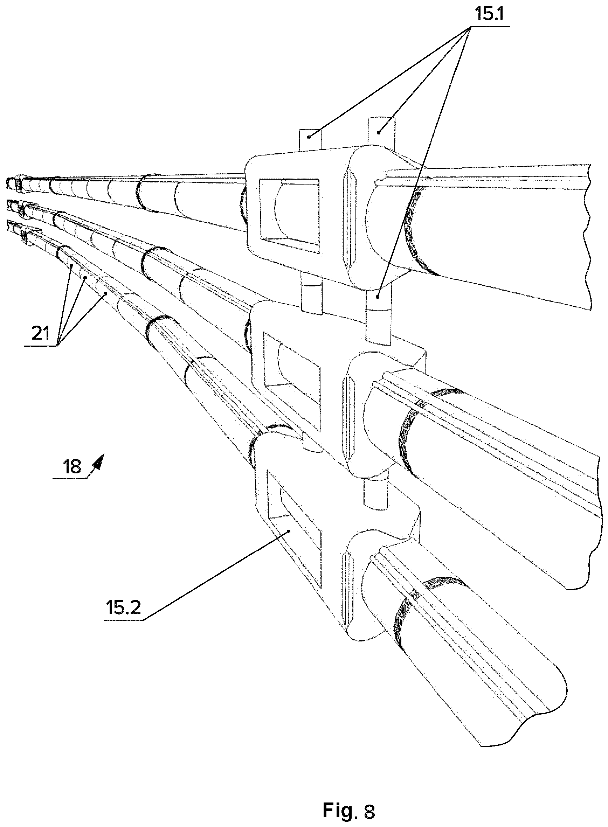

Alternatively, the proposed artificial orbital ring complex by Yunitski may comprise several (two or more) interconnected annular housings 12. Such annular housings 12 may be arranged in parallel planes 3 and combined into a single annular belt which center of mass coincides with the center of mass 6 of the natural cosmic body 2 (see Fig.8).

Maintaining the stability of the positioning of the ring satellite 1 in a specified circular orbit 5 is ensured by centrifugal forces and, therefore, depends on the rotation velocity thereof.

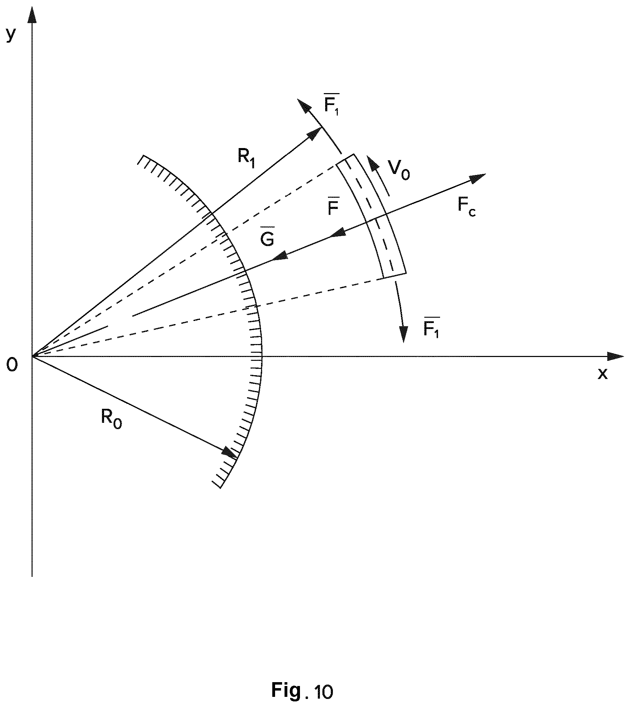

The optimal mode of operation of the artificial orbital ring complex by Yunitski located in the circular orbit 5 around said natural cosmic body 2 is the equilibrium state (see Fig. 10). For this, in optimal embodiments of operation, each element of the ring satellite 1 must have the velocity of $V_0$ slightly higher than the first cosmic velocity for the circular orbit 5 of the ring satellite 1.

Maintaining equilibrium and stabilizing positioning of the ring satellite 1 in the specified circular orbit 5 is achieved by its rotation around the natural cosmic body 2 with the velocity $V_0$, defined by the ratio:

$$1 \leq V_0/V_{1H} \leq 1.01, \qquad (1)$$

where $V_{1H}$, - first space velocity for the equatorial circular orbit of the location of the ring line connecting the centers of mass of the cross sections $M_1$ of the artificial orbital ring complex.

The achievement in the circular orbit 5 by the ring satellite 1 of the specified velocity $V_0$, satisfying the ratio (1), ensures the stability of its positioning and minimization of energy costs to realize such stabilization.

A decrease in the velocity $V_0$ beyond the lower limit of the ratio (1), that is, at $V_0/V_1 < 1$, will not allow, without special measures, to keep the ring satellite 1 from falling on the natural cosmic body 2, and an increase in its value beyond the upper limit of ratio (1), that is, at $V_0/V_1 > 1.01$, will not allow to realize the requirements of safety and preservation of the structural integrity of the artificial orbital ring complex due to the critical increase in internal tensile strain in the structural frame 7 and destruction thereof.

Hereby, the ring satellite 1 is positioned at altitude $H_0$, m, defined by the ratio:

$$0.02 \leq H_0/R_0 \leq 0.5, \qquad (2)$$

where $R_0$ - radius of the natural cosmic body in the equatorial plane.

A decrease in the altitude $H_0$ beyond the lower limit of the ratio (2), that is, at $H_0/R_0 < 0.02$, will lead to intensive deceleration of the ring satellite 1 in the upper atmosphere of the natural cosmic body 2, for example, the planet Earth, and the need for additional run-up thereof around the natural cosmic body 2, for example, using jet engines.

An increase in values of the altitude $H_0$ beyond

the upper limit of the ratio (2), that is, at $H_0/R_0 > 5$, will lead to an excessively high altitude for the placement of the ring satellite 1 above the natural cosmic body 2 and a penalized efficiency of geospatial transportation between the natural cosmic body 2 and the ring satellite 1, wherein, for example, the industry of civilization living on the planet Earth can be located.

Additionally, the structural frame 7 of the ring satellite 1 in the operational state is formed longitudinally tensioned by force $F_0$ defined by the ratio:

$$1 \leq F_0/F_1 \leq 1.01, \qquad (3)$$

where: $F_1$, - centrifugal force acting on the structure of the ring satellite 1.

The range of pretension force $F_0$ of the load-bearing structural frame 7 is selected based on the strength requirements provided by the design assignment and the feasibility of providing elastic deformation of the annular housing 12 of the ring satellite 1 under the action of centrifugal forces.

The achievement of the value of the ratio (3) less than the specified limit value equal to 1, corresponds to the case when the load-bearing member 23 is not tensioned and the ring satellite 1 becomes unstable, since longitudinal compression will appear therein, which will lead to its falling on the natural cosmic body 2.

If the upper limit of the ratio (3), equaling to 1.01, is exceeded, it becomes necessary to create axial tensile forces in the structure of the ring satellite 1, not due to the centrifugal forces, but, for example, with use of powerful jet engines, which is unacceptable during the long-term operation of the satellite.

Additionally, the object of the present invention is to realize the artificial orbital ring complex in relation to the conditions of the planet Earth.

As noted above, to ensure the redistribution of specialists and cargos delivered from the Earth along the artificial orbital ring complex, it is advantageous to implement any of the known high-speed transport systems 24, such as high-speed transport system in the form of (not necessarily hermetically sealed) thin-walled tube 25 with the corresponding internal diameter $D_0$ (see Fig.6). In this alternative embodiment, the structural frame 7 may be made in the form of longitudinally tensioned, at least one, thin-walled tube 25 with the internal diameter $D_0$ defined by the ratio:

$$1 \leq D_0/h_0 \leq 5, \qquad (4)$$

where: $h_0$, - the average height of homo sapiens living on Earth.

The embodiment of the structural frame 7 from the longitudinally tensioned, at least one, thin-walled tube 25 of the internal diameter $D_0$ defined by the ratio (4) is thanks to the optimization of the technology of constructing and servicing the artificial orbital ring complex.

Reduction of the internal diameter of $D_0$, of thin-walled tube 25 beyond the lower limit of the ratio (4), that is, when this ratio is less than 1, leads to penalized comfort of transportation of specialists and significant restrictions on the transportation of goods, in particular because a person will not be able to stand vertically in the cabin of the vehicle.

When the internal diameter $D_0$, of the thin-walled tube 25 increases beyond the upper limit of the ratio (4), that is, when this ratio has a value greater than 5, the material capacity and cost of the structure significantly increase with a significant deterioration in its manufacturability.

Additionally, the thin-walled tube is required to prevent foreign objects from entering the trajectory of the orbital high-speed vehicle, for example, tools (wrench, screwdriver, etc.), parts (bolt, nut, etc.), which will be abundant in orbit if, for example, the space part of the earth industry is located in ring satellite 1.

The achievement of the set goals is also ensured by a method of realization of artificial orbital ring complex, the arrangement of which corresponds to the above design of the ring satellite 1, and its positioning in circular orbit 5 of a natural cosmic body 2.

Such method includes delivery at the first space velocity of parts of the structural frame 7 with load-bearing member 23 onto the circular orbit 5 of the natural cosmic body 2, utilities 8, communications 9, power 10, residential 19 and research-production 20 units, transition galleries 11, their arrangement and assembly in and/or on the annular housing 12 with protective shell 13.

Hereby, the testing and verifying performance of all operational parameters are performed on the arrangement of the ring satellite 1 assembly.

An essential condition for realization of the method is that, during installation, longitudinal tensioning is formed in the extended load-bearing structure of the load-bearing member 23 of the structural frame 7, by increasing the rotation velocity of the ring satellite 1 in circular orbit 5 to the velocity of $V_0$, m/sec, defined by the ratio:

$$1 \le V_0/V_1 \le 1.01,$$

where $V_{1H}$, - first space velocity for the equatorial circular orbit of the location of the ring line connecting the centers of mass of the cross sections of the artificial orbital ring complex, at altitude of $H_0$, m, defined by the ratio:

$$0.02 \le H_0/R_0 \le 0.5,$$

where $R_0$, m, - radius of natural cosmic body in equatorial plane.

Hereby, the ring satellite 1 is made with the length of the ring $L_0$, m, defined by the ratio:

$$1.01 \le L_0/L_1 \le 1.5, \qquad (5)$$

where: $L_1$, m, - length of the equator of the natural cosmic body.

Reducing the length of the ring $L_0$ of the ring satellite 1 beyond the lower limit of the ratio (5), i.e. with $L_0/L_1 < 1.01$, will lead to the fact that the ring satellite 1 will be placed at too low an altitude and it will be necessary to constantly adjust its orbit in order to prevent falling thereof on the natural cosmic body 2.

Increasing the length of the ring $L_0$ of the ring satellite 1 beyond the lower limit of the ratio (5), i.e. with $L_0/L_1 > 1.5$, will lead to the fact that the ring satellite 1 will be placed too high above the natural cosmic body 2, which will penalize the logistics of geocosmic transportation therebetween and the natural cosmic body 2.

Hereby, the positioning of the ring satellite 1 in circular orbit 5 encircling the natural cosmic body 2 is carried out in its equatorial plane 3.

**Industrial applicability**

The realization of the artificial orbital ring complex by Yunitski according to the claimed method can be carried out in the following ways.

One alternative to the creation of an artificial orbital ring complex is the sequential delivery to the circular orbit 5 of the natural cosmic body 2 of the assembly elements and components of the ring satellite 1 by conventional space vehicles (rockets) and their subsequent assembly into a single complex. The assembly of an object in space orbit from separate parts is already known (for example, the MIR space station and the international space station).

The optimum embodiment of the claimed complex is to prefabricate, assemble and debug, on the natural cosmic body 2, the entire structure of the ring satellite 1 with its subsequent delivery and positioning in intended circular orbit.

For this purpose, at the assembly stage, parts of the structural frame 7 and the annular housing 12 are combined into the ring satellite 1, equipped with a protective shell 13 provided by the design solution, as well as all systems including systems of control and life support. Further testing, verification and debugging of operability of all operational parameters of the complex in assembly are carried out, and positioning of the ring satellite 1 in circular orbit 5 of natural cosmic body 2 is carried out, for example, by combined simultaneous effort of large number of space rockets uniformly distributed along perimeter of the annular housing 12 of the ring satellite 1.

The process of positioning the ring satellite 1 in the circular orbit 5 of the natural cosmic body 2 is most expedient to be carried out in the following order:

- on the natural cosmic body 2, the structural frame 7 of the ring satellite 1 is assembled along the equator 4, on which the annular housing 12 thereof is fixed with the protective shell 13 and all other structural elements;

- perform testing and verification of operability of all operational parameters of the assembled ring satellite 1;

- with use of the known general planetary transport system by Yunitski, the assembled and tested structure of the ring satellite 1 fastened on the said system is raised to height of $H_0$ at the first space velocity $V_{1H}$, that is, to circular orbit 5 of a natural cosmic body 2 located in its equatorial 4 plane 3;

- then, by means of said general planetary transport system by Yunitski, the ring satellite 1 is further rotated in the circular orbit 5 to the intended design velocity $V_0$ exceeding the first space velocity $V_{1H}$ by amount defined by the ratio (1);

- at the specified circular orbit 5, the ring satellite 1 is undocked from the general planetary transport system.

After delivery of the ring satellite 1 to the specified circular orbit, people and cargoes are redeployed along the zones of their priority location on the artificial orbital ring complex. It is advantageous to provide such movements by means of traffic arteries embodied as any of the known high-speed transport systems 24 mounted on the annular housing 12 and made, for example, in the form of a string transport track structure based on the above-described thin-walled tube 25 of the corresponding internal diameter $D_0$.

Installation of the orbital ring complex in orbit using a general planetary vehicle can be carried out in stages:

- delivery to the circular orbit 5 of only the structural frame 7 (load-bearing structure) of the ring complex weighing within the load capacity of the general planetary vehicle - up to 10 million tons per flight;

- delivery of the remaining elements of the ring complex and their installation on the structural frame 7 (load-bearing structure), on the circular orbit 5 under zero gravity conditions, since the ring satellite 1 will have the first space velocity;

- run-up of the ring complex to the velocity exceeding the first space velocity, for example, by the value of 0.000001 $V_{1H}$.

Similar to the described examples of the embodiment of the artificial orbital ring complex by Yunitski in the orbit of the Earth, its implementation is possible, for example, in the orbit of Mars, or in the orbit of another planet, or in the orbits of satellites of planets, for example, the moon, or in the orbits of other massive natural cosmic bodies, for which the above implementation principle will be entirely and completely fair. While the said technical solution describes preferred embodiments of the structure, it is clear that the invention is not limited thereto and can be accomplished using other known structural elements within the scope of the invention, as defined by the appended claims.

**Claims**

1. Artificial orbital ring complex, made in the form of a ring satellite (1), located in a circular orbit (5) around a natural cosmic body (2) in the equatorial plane, comprising:

a structural frame (7), utilities (8) and communications (9), power units (10), transition galleries (11) placed in annular housing (12) with protective shell (13), gate chambers (14) with docking units (15.1, 15.2), configured to dock with space vehicles (16), residential and research-production units (19, 20), equipped with systems of control, life support, active and passive protection against the harmful effects of space, whereby structural frame (7) is longitudinally tensioned, and ring satellite (1) in circular motion in orbit around the natural cosmic body (2) with velocity $V_0$, m/sec, defined by the ratio:

$$1 \leq V_0/V_{IH} \leq 1.01,$$

where $V_{1H}$, m/sec, - first space velocity for the equatorial circular orbit of the location of the ring line connecting the centers of mass of the cross sections of the artificial orbital ring complex, at altitude of $H_0$, m, defined by the ratio:

$$0.02 \leq H_0/R_0 \leq 0.5,$$

where $R_0$, m, - radius of natural cosmic body (2) in equatorial (4) plane (3), ***characterized***

***in that*** the structural frame (7) in the operational state is longitudinally tensioned with tensile force $F_0$, N, defined by the ratio:

$$1 \leq F_0/F_1 \leq 1.01,$$

where: $F_1$, N, - axial force due to action of centrifugal force on the structure of the ring satellite (1), wherein the tensile force $F_0$, N for longitudinal tensioning of the structural frame (7) is ensured by a controlled additional increase in velocity during circular motion of the structural frame (7) and the annular housing (12) of the ring satellite (1) in circular orbit (5) around the natural cosmic body (2) in order to achieve the value of

the specified velocity $V_0$ when positioned in the circular orbit (5),
*in that* the center of mass of each cross section of the structural frame (7) is aligned with the center of mass of the corresponding cross section of the artificial orbital ring complex,
*in that* the structural frame (7) contains at least one tensioned load-bearing member (23) encircling the natural cosmic body (2) in the equatorial plane,
*in that* the load-bearing member (23) is formed by mating of load-bearing structure consisting of longitudinally tensioned extended elements (23.1), with the body (23.2) of the load-bearing member (23) and/or with an annular housing (12) with protective shell (13),
*in that* the additional increase in velocity during circular motion is provided by using jet engines of the ring satellite (1) and
*in that* a space protection system comprises the protective shell (13) of the annular housing (12) embodied as a multilayer one and comprising anti-meteorite, anti-radiation, and heat insulation layers (17.1, 17.2, 17.3).

2. Complex according to claim 1, *wherein* the extended elements (23.1) of the load-bearing structure are made of wire, and/or rods, and/or twisted or untwisted ropes, and/or strands, strips, bands, tapes, tubes and other extended elements.

3. Complex according to claim 1 or 2, *wherein* the structural frame (7) is made electrically conductive.

4. Complex according to any of claims 1-3, *wherein* the natural cosmic body (2) is represented by the planet Earth.

5. Complex according to any of claims 1-4, *wherein* the structural frame (7) is made from at least one longitudinally tensioned thin-walled tube of internal diameter $D_0$, m, defined by the ratio:

$$1 \leq D_0/h_0 \leq 5,$$

where: $h_0$, m, - the average height of homo sapiens living on Earth.

6. Complex according to claim 1, wherein any of the anti-meteorite, anti-radiation, or heat insulation layers (17.1, 17.2, 17.3) is made as earth biogeocenosis with a fertile soil layer.

**Patentansprüche**

1. Künstlicher Orbitalringkomplex, der in der Form eines Ringsatelliten (1) gefertigt ist und der sich in einer kreisförmigen Umlaufbahn (5) um einen natürlichen kosmischen Körper (2) in der Ebene des Äquators befindet, wobei der Komplex aufweist:

einen Strukturrahmen (7), Versorgungseinrichtungen (8) und Kommunikationseinrichtungen (9), Leistungseinheiten (10), Übergangsgalerien (11), die in einem ringförmigen Gehäuse (12) mit einer Schutzhülle (13) angeordnet sind, Torkammern (14) mit Andockeinheiten (15.1, 15.2), die konfiguriert sind, um mit Raumfahrzeugen (16) zu docken, Wohn- und Forschungsproduktionseinheiten (19, 20), die mit Systemen zur Steuerung, Lebensunterstützung, aktivem und passivem Schutz gegen die schädlichen Effekte des Weltraums ausgestattet sind, wobei der Strukturrahmen (7) in Längsrichtung gespannt ist, und der Ringsatellit (1) in kreisförmiger Bewegung in einer Umlaufbahn um den natürlichen kosmischen Körper (2) mit einer Geschwindigkeit $V_0$ [m/s] ist, definiert durch das folgende Verhältnis:

$$1 \leq V_0/V_{1H} \leq 1,01,$$

wobei $V_{1H}$ [m/s] eine erste Weltraumgeschwindigkeit für die äquatoriale kreisförmige Umlaufbahn der Position der Ringlinie, die die Massenzentren der Querschnitte des künstlichen Orbitalringkomplexes verbindet, in einer Höhe von $H_0$ [m] ist, definiert durch das folgende Verhältnis:

$$0,02 \leq H_0/R_0 \leq 0,5,$$

wobei $R_0$ [m] ein Radius des natürlichen kosmischen Körpers (2) in der Ebene (3) der Äquators (4) ist,
***dadurch gekennzeichnet,***
***dass*** der Strukturrahmen (7) in dem Betriebszustand in Längsrichtung mit einer Zugkraft $F_0$ [N] gespannt ist, definiert durch das folgende Verhältnis:

$$1 \leq F_0/F_1 \leq 1,01,$$

wobei: $F_1$ [N] eine Axialkraft aufgrund der Wirkung der Zentrifugalkraft auf die Struktur des Ringsatelliten (1) ist, wobei die Zugkraft $F_0$ [N] für die Längsspannung des Strukturrahmens (7) durch eine gesteuerte zusätzliche Erhöhung in der Geschwindigkeit während der kreisförmigen Bewegung des Strukturrahmens (7) und des ringförmigen Gehäuses (12) des Ringsatelliten (1) in der kreisförmigen Umlaufbahn (5) um den natürlichen kosmischen Körper (2) gewährleistet wird, um den Wert der spezifizierten Geschwindigkeit $V_0$ zu erreichen, wenn dieser in der kreisförmigen Umlaufbahn (5) positioniert ist,

*dass* der Massenmittelpunkt jedes Querschnitts des Strukturrahmens (7) mit dem Massenmittelpunkt des entsprechenden Querschnitts des künstlichen Orbitalringkomplexes ausgerichtet ist,

*dass* der Strukturrahmen (7) mindestens ein gespanntes lasttragendes Glied (23) enthält, das den natürlichen kosmischen Körper (2) in der Ebene des Äquators umkreist,

*dass* das lasttragende Glied (23) durch Ineinandergreifen mit einer lasttragenden Struktur, die aus in Längsrichtung gespannten verlängerten Elementen (23.1) besteht, mit dem Körper (23.2) des lasttragenden Glieds (23) und/oder mit einem ringförmigen Gehäuse (12) mit einer Schutzhülle (13) gebildet ist,

*dass* die zusätzliche Erhöhung in der Geschwindigkeit während der kreisförmigen Bewegung durch Verwendung von Strahltriebwerken des Ringsatelliten (1) bereitgestellt wird, und

*dass* ein Weltraum-Schutzsystem die Schutzhülle (13) des ringförmigen Gehäuses (12) aufweist, das als ein mehrschichtiges Gehäuse ausgeführt ist und Antimeteorit-, Antistrahlungs- und Wärmeisolierungsschichten (17.1, 17.2, 17.3) aufweist.

2. Komplex nach Anspruch 1, *wobei* die verlängerten Elemente (23.1) der lasttragenden Struktur aus Draht und/oder Stäben und/oder verdrillten oder unverdrillten Seilen und/oder Strängen, Streifen, Bändern, Klebebändern, Röhren und anderen verlängerten Elementen gefertigt sind.

3. Komplex nach Anspruch 1 oder 2, *wobei* der Strukturrahmen (7) elektrisch leitfähig gefertigt ist.

4. Komplex nach einem der Ansprüche 1 bis 3, *wobei* der natürliche kosmische Körper (2) durch den Planeten Erde repräsentiert wird.

5. Komplex nach einem der Ansprüche 1 bis 4, *wobei* der Strukturrahmen (7) aus mindestens einer in Längsrichtung gespannten dünnwandigen Röhre mit einem Innendurchmesser $D_0$ [m] gefertigt ist, definiert durch das folgende Verhältnis:

$$1 \le D_0 / h_0 \le 5,$$

wobei: $h_0$ [m] die durchschnittliche Höhe von auf der Erde lebenden Homo-Sapiens ist.

6. Komplex nach Anspruch 1, wobei eine der Antimeteorit-, Antistrahlungs- oder Wärmeisolierungsschichten (17.1, 17.2, 17.3) als Erdbiogeozönose mit einer fertilen Bodenschicht gefertigt ist.

## Revendications

1. Complexe annulaire orbital artificiel, réalisé sous la forme d'un satellite annulaire (1), situé sur une orbite circulaire (5) autour d'un corps cosmique naturel (2) dans le plan équatorial, comprenant :

un cadre structural (7), des unités d'équipement (8), de communications (9) et d'alimentation (10), des galeries de transition (11) placées dans une enveloppe annulaire (12) avec une coque protectrice (13), des chambres d'accès (14) avec des unités d'amarrage (15.1, 15.2), configurées pour s'amarrer à des véhicules spatiaux (16), des unités résidentielles et de recherche-production (19, 20), équipées de systèmes de contrôle, de survie, de protection active et passive contre les effets néfastes de l'espace, selon lequel le cadre structural (7) est tendu longitudinalement, et le satellite annulaire (1) en mouvement circulaire sur une orbite autour du corps cosmique naturel (2) à la vitesse $V_0$, en m/s, définie par le rapport :

$$1 \le V_0/V_{1H} \le 1{,}01,$$

où $V_{1H}$, en m/sec, est la première vitesse spatiale pour l'orbite circulaire équatoriale de l'emplacement de la ligne annulaire reliant les centres de masse des sections transversales du complexe annulaire orbital artificiel, à une altitude de $H_0$, en m, définie par le rapport :

$$0{,}02 \le H_0/R_0 \le 0{,}5,$$

où $R_0$, en m, est le rayon du corps cosmique naturel (2) dans le plan (3) équatorial (4),

*caractérisé*

*en ce que* le cadre structural (7) à l'état opérationnel est tendu longitudinalement avec une force de traction $F_0$, en N, définie par le rapport :

$$1 \le F_0/F_1 \le 1{,}01,$$

où : $F_1$, en N, est la force axiale due à l'action de la force centrifuge sur la structure du satellite annulaire (1), dans lequel la force de traction $F_0$, en N, pour la mise en tension longitudinale du cadre structural (7), est assurée par une augmentation supplémentaire contrôlée de la vitesse pendant le mouvement circulaire du cadre structural (7) et de l'enveloppe annulaire (12) du satellite annulaire (1) en orbite circulaire (5) autour du corps cosmique naturel (2) afin d'atteindre la valeur de la vitesse spécifiée $V_0$ lorsqu'il est positionné sur l'orbite circulaire (5),

**en ce que** le centre de masse de chaque section transversale du cadre structural (7) est aligné sur le centre de masse de la section transversale correspondante du complexe annulaire orbital artificiel,

**en ce que** le cadre structural (7) contient au moins un élément porteur de charge (23) tendu entourant le corps cosmique naturel (2) dans le plan équatorial,

**en ce que** l'élément porteur de charge (23) est formé par l'accouplement d'une structure porteuse de charge constituée d'éléments étendus tendus longitudinalement (23.1), avec le corps (23.2) de l'élément porteur de charge (23) et/ou avec une enveloppe annulaire (12) avec une coque protectrice (13),

**en ce que** l'augmentation supplémentaire de la vitesse pendant le mouvement circulaire est assurée par l'utilisation de moteurs à réaction du satellite annulaire (1) et

**en ce qu'**un système de protection spatial comprend la coque protectrice (13) de l'enveloppe annulaire (12) réalisée sous une forme multicouche et comprenant des couches anti-météorites, anti-radiations et d'isolation thermique (17.1, 17.2, 17.3).

2. Complexe selon la revendication 1, *dans lequel* les éléments étendus (23.1) de la structure porteuse de charge sont constitués de fil, et/ou de tiges, et/ou de cordes torsadées ou non torsadées, et/ou de brins, de lanières, de bandes, de rubans, de tubes et d'autres éléments étendus.

3. Complexe selon la revendication 1 ou 2, *dans lequel* le cadre structural (7) est rendu électriquement conducteur.

4. Complexe selon l'une quelconque des revendications 1 à 3, *dans lequel* le corps cosmique naturel (2) est représenté par la planète Terre.

5. Complexe selon l'une quelconque des revendications 1-4, *dans lequel* le cadre structural (7) est constitué d'au moins un tube à paroi mince tendu longitudinalement de diamètre interne $D_0$, en m, défini par le rapport :

$$1 \leq D_0/h_0 \leq 5,$$

où : $h_0$, en m, est la taille moyenne de l'homo sapiens vivant sur Terre.

6. Complexe selon la revendication 1, dans lequel l'une quelconque des couches anti-météorites, anti-radiations ou d'isolation thermique (17.1, 17.2, 17.3) est réalisée sous forme de biogéocénose terrestre avec une couche de terre fertile.

**Fig. 1**

**Fig.** 2

**Fig. 3**

**Fig . 4**

**Fig . 5**

**Fig. 6**

Fig. 7

Fig. 8

25

24

14

17.1

17.2

17.3

8,9,11

17

14

**Fig.** 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020024035 A2

**Non-patent literature cited in the description**

- **BIRCH PAUL**. Orbital Ring Systems and Jacob's Ladders. *I JOURNAL OF THE BRITISH INTERPLANETARY SOCIETY*, 30 November 1982, vol. 35, 474-497
- **BIRCH PAUL**. Orbital Ring Systems and Jacob's Ladders - I. *JOURNAL OF THE BRITISH INTERPLANETARY SOCIETY*, 01 January 1983, vol. 36, 115-128
- **BIRCH PAUL**. Orbital Ring Systems and Jacob's Ladders - I1. *JOURNAL OF THE BRITISH INTERPLANETARY SOCIETY*, 01 January 1983, vol. 36, 231-238